# EUROPEAN PATENT APPLICATION

(11) **EP 0 567 189 A1**
(43) Date of publication of application: **27.10.1993**
(21) Application number: 93201110.9
(22) Date of filing: 16.04.1993
(51) Int. Cl.: B60P 1/44

(54) **Elevator device fitted to the rear of a transport vehicle provided with a safety bumper**

(30) Priority: 21.04.1992 IT MI920951
(71) Applicant: CAMPISA S.r.l., I-20032 Ospitaletto di Cormano (MI) (IT)
(72) Inventor: Nelzi, Giampaolo, I-22070 Appiano Gentile (Como) (IT)
(74) Representative: Fusina, Gerolamo

(57) **Abstract**

The elevator device (1) is fitted to the rear of the load-bearing structure (14) of a transport vehicle provided with a safety bumper (27). The device (1) comprises a loading platform (2), of which at least two arms (8, 9) operate between the lateral ends (26) of the safety bumper (27) and the point (28) of maximum lateral projection of the vehicle. The device (1) also comprises two elements (5) by which the vehicle load-bearing structure (14) is supported on the ground, these operating as yieldable supports to prevent the vehicle load-bearing structure (14) being able to locally deform permanently when the vehicle attitude changes with changing load.

## Description

This invention relates to an elevator device fitted to the rear of a goods transport vehicle provided with a safety bumper, ie that rear bumper which prevents a colliding vehicle finishing under the load floor between the wheels of the rear axle of the vehicle against which it has collided.

For lightness, construction automation and hence cost reasons, light vehicles for goods transport may have their load-bearing structure formed from very thin sheet metal elements which are bent and joined together by spot welding and possibly bolts.

This load-bearing structure, which is now common for automobiles and will be known as the box structure for ease of identification, is able to withstand the maximum scheduled load without preoccupation only if it is distributed uniformly along the load floor, or on condition that it is localized only at the points expressly defined by the constructor, such as the suspension connection points or the points for positioning the lifting jack.

Loading such load-bearing structures with in particular torsional loads even of a value substantially less than the maximum withstandable load (such as loads created by the use of a normal elevator device) can lead to localized permanent deformation of the vehicle load-bearing structure, with all the resultant negative consequences.

It is therefore apparent that fitting an elevator device to a vehicle with a load-bearing structure of box type is dependent on costly reinforcement and partial reconstruction of at least the rear part of its load-bearing structure, resulting in a heavier structure and a reduction in capacity. It should also be noted that for safety reasons such vehicles are provided with a safety bumper which (again for the aforesaid reasons) is of box structure and is also used as a resistant element of the vehicle load-bearing structure, so forming an integral part of said load-bearing structure.

In accordance with current law, a safety bumper must have its lateral ends inward of the corresponding point of maximum lateral projection of the rear axle by not more than 10 cm.

It is therefore apparent that as it represents a resistant element it is not possible without serious consequences to interrupt the continuity of said bar, for example for the purpose of passing the arms of the elevator device through it, even if the problems of local strength of the load-bearing structure at the points of action of the elevator device have already been overcome.

To give an idea of the difficulty of solving the technical problem of fitting an elevator device to such vehicle load-bearing structures, it should be noted that not only is it not possible to split the safety bumper to allow passage of the arms of the elevator device, but it is also not possible for example to provide the elevator device with conventional hydraulically or mechanically operated lifting elements which rest on the ground.

Such elements would indeed discharge directly to the ground the loads deriving from the weights raised and/or lowered by the platform, so preventing them from locally stressing the load-bearing structure.

However as the attitude of the vehicle varies due to the yieldability of the suspensions and caused by the continuous increase in the weight distributed over the vehicle load floor by the effect of the loading operations, these weights would result in a progressively greater reaction force against the rear end of the vehicle load-bearing structure in an upward direction.

By reaction, the vehicle load-bearing structure would not be able to do other than bend at its central part until it becomes permanently deformed within that part.

The deformation ceases when the wheels of the axle closest to said elements resting on the ground are again able to offer a resistance sufficient to halt the deformation.

The object of the present invention is to obviate the aforesaid drawbacks by providing an elevator device which, when used on a transport vehicle provided with a safety bumper, can be fitted without the need to split said safety bumper and can operate without prejudicing the integrity of the vehicle load-bearing structure.

This object is attained by a device in accordance with claim 1.

By arranging the arms of the quadrilateral in such a manner that at least two operate within the narrow space between the lateral ends of the safety bumper and the point of maximum lateral projection of the vehicle it becomes unnecessary to split or reduce the safety bumper. In addition, any deformation of the vehicle load-bearing structure is prevented because each support element yields under the effect of the load when this exceeds that allowable by the vehicle load-bearing structure at the point of cooperation, to discharge the excess stresses onto the vehicle axles, which as seen can withstand loads even equal to the maximum allowable load.

However the supporting action of the support elements, although necessarily limited, is sufficient to enable the traditional elevator devices to be used in all safety for the vehicle load-bearing structure without requiring said structure to undergo particular modifications.

The invention is illustrated by way of non-limiting example in the figures of the accompanying drawings.
Figure 1 is a schematic side view of an elevator device of the invention on the line I-I of Figure 3, of which only the lifting platform and an articulated quadrilateral linkage are shown in order to facilitate understanding;
Figure 2 is a schematic side view of the elevator device of the invention, of which only the lifting platform and an articulated quadrilateral linkage are shown;
Figure 3 is a partial schematic view from above of the elevator device linkage and support elements;
Figure 4 is a scheme of the hydraulic circuit.

With reference to said figures, the elevator device of the invention, indicated overall by 1, comprises a loading platform 2, an articulated quadrilateral linkage 3, a hydraulic circuit 4 and at least one support element 5. The device 1 is designed particularly to be fitted to the rear of a transport vehicle provided with a safety bumper 27.

The vehicle has a load-bearing structure 14 possibly of the type formed from bent sheet metal elements joined together by spot welding and/or bolts. The vehicle has a load floor 44. Each of the lateral ends of the safety bumper 27 lies inward of the point of maximum lateral projection of the vehicle, in accordance with law.

The loading platform 2 is hinged at 6 and 7 respectively to the lifting arm 8 and reaction arm 9 of the articulated quadrilaterals of the linkage 3.

The linkage 3 comprises substantially the said lifting arm 8 and reaction arm 9, two tubular elements 10 of polygonal cross-section and a tubular element 11 of circular cross-section. The element 11 of circular cross-section is arranged inside the tubular elements 10 and is coaxial thereto on the axis 13, these latter preferably being of square cross-section and fixed to the vehicle load-bearing structure 14 possibly by suitable flanges 15.

The square cross-section of the tubular elements 10 facilitates the mounting of the device 1 on the vehicle in that the upper surface of the element 10 can be taken as the horizontal reference plane for the entire device, and which could not be so if the the cross-section of said element 10 were circular. This hence avoids the need for reference means.

The tubular element 11 is able to rotate within the tubular elements 10 on supports 16 which are externally polygonal or square, and internally circular. To avoid the need for lubrication, the supports 16 can be of a self-lubricating material such as Teflon.

The tubular element 11 is rotated by a first hydraulic cylinder 17 forming part of the hydraulic circuit 4 (Figure 4).

The body of the hydraulic cylinder 17 is connected by two flanges 18 to each of the tubular elements 10, its rod being connected to the tubular element 11 by one or more flanges 19.

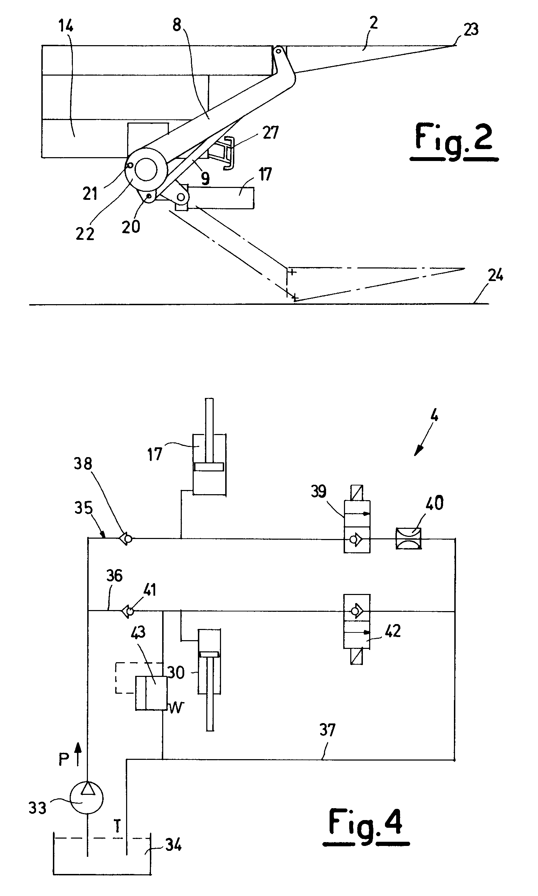

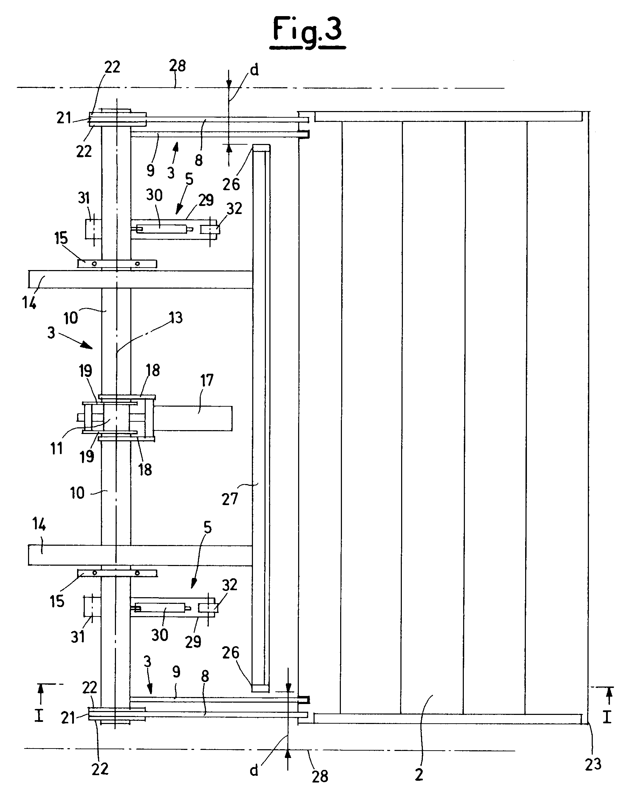

The reaction arms 9 are hinged at 20 (Figure 2) to the tubular element 10, whereas the lifting arms are hinged at 21 (Figures 2 and 3) to flanges 22 rigid with the tubular element 11.

This hinging eccentric to the axis 13 of the lifting arm 8 achieves the double purpose of bringing the outer edge 23 of the platform 2 into contact with the ground 24 when the platform 2 is in a lowered position, and to bring the upper surface of the platform 2 into correspondence with the rear vertical wall 25 of the vehicle when the platform is totally raised into a horizontal position, so achieving alignment between the platform 2 and the load floor 44.

To achieve a width such as to be able to operate between the lateral ends 26 of the safety bumper 27 and the points of maximum lateral projection of the vehicle (defined by the axes 28), at least those portions of the reaction arms 9 facing the ends 26 operate below the lifting arms 8 or below the safety bumper 27.

To give an idea, the distance d between the points 26 and 28 may in some cases be only 100 mm.

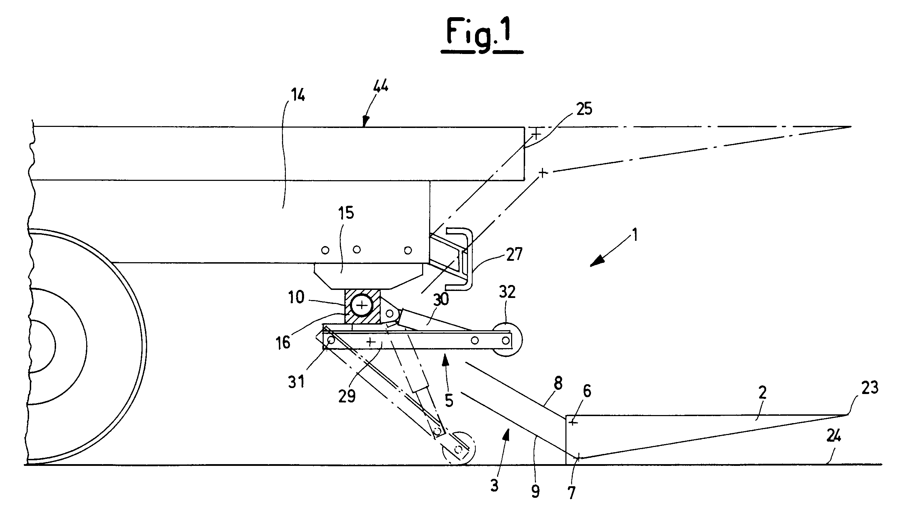

Each of the support elements 5 preferably comprises (see Figures 1 and 3) a leg 29 which is hinged at a first end at 31 to the tubular elements 10 or to the load-bearing structure 14, its second end being intended to rest on the ground possibly via an idle wheel 32.

The leg 29 is retracted from the ground by a hydraulic system or elastic means, not shown, preloaded by the action of a second cylinder 30 which during its active expansion stage maintains the wheel 32 constantly in contact with the ground 24.

The most common elastic means could be a spiral spring, the first end of which is fixed to the load-bearing structure 14, with its second end fixed to the leg 29. The second cylinder 30 also forms part of the hydraulic circuit 4, described hereinafter.

This system for discharging the forces to the ground is preferable because the use of at least one vertical hydraulic support and discharge cylinder is particularly difficult in that a free space of 7° has to be respected rearwards and upwards from the point of contact of the rear wheels with the ground, and the vertical or inclined application of hydraulic supports may be prevented because of their height. The described arrangement is however only indicative as the application can in particular cases be achieved even with one or more hydraulic cylinders positioned vertically close to the supporting unit for the elevator device.

The hydraulic circuit 4 comprises a pump 33 which dips into a tank 34 to feed pressurized oil to two parallel feed branches, namely a first branch 35 and a second branch 36 with a return line 37 terminating in the tank 34. The first feed branch 35 comprises, listed in the direction of circulation of the oil, a first non-return valve 38, the first hydraulic cylinder 17, a first check valve preferably within a two-position (open and closed) slide valve 39, and a flow regulator 40.

The second feed branch 36 comprises, listed in the direction of circulation of the oil, a second non-return valve 41, a maximum pressure valve 43, one or more hydraulic cylinders 30 and a second check valve preferably within a slide valve 42.

It is important to note that the total thrust obtained by the cylinder or cylinders 30 must be equal to or greater than that of the cylinder 17. This difference and the maximum operating pressure of the circuit 4 set by the valve 43 are such that:
- the total thrust transmitted to the vehicle load-bearing structure 14 by each support element 5 at its point of action does not exceed a value such as to induce yielding of the load-bearing structure by flexure in the reverse direction at the most stressed point of it;
- the force simultaneously exerted by the cylinder 17 is sufficient to lift the maximum lifting load scheduled for the device.

The point at which yielding of the structure by flexure in the reverse direction could occur is located between the point of application of the support 5 and the point of application of the front suspensions. In other words the support 5 must be a yieldable support which performs its function by adapting to the yieldability of the vehicle suspensions so as to prevent it from only progressively absorbing most of the vehicle weight acting following the progressive yielding of the suspensions.

If the support devices 5 were rigid and not yieldable, the progressive loading increase would cause yielding of the load-bearing structure 14 with permanent deformation by downward flexure at a point between the supports 5 and the vehicle front axle. During unloading operations, each time the platform rises, the hydraulic circuit 4 with parallel feed of the branches 36 and 37 immediately restores contact between the ground 24 and the support elements 5 because the thrust provided by the total support elements 5 is equal to or greater than that of the first lifting cylinder 17, so achieving an automatic arrangement which provides maximum protection against yielding of the load-bearing frame 14 by the application of cantilever weights on the platform 2. As the support elements 5 yield under a certain overload, the leg 29 in retracting could push into the ground, so nullifying the automatic safety aspect. The idle wheel 32 prevents this.

With particular reference to Figure 3, in the embodiment shown therein the lifting arms and the reaction arms of each quadrilateral are arranged in two parallel vertical planes, which however lie within the distance d, at least for two arms.

It is apparent from the aforegoing that each articulated quadrilateral could also be formed such that each arm, whether a lifting or reaction arm, could be in the form of two elements arranged in any manner provided they lie within the distance d.

These elements of each arm can for example be arranged side by side in two different planes or be arranged one above the other in a single vertical plane. The various aforesaid configurations are chosen on the basis of the best compromise between resistance to vertical forces and rigidity against swing in the horizontal plane of the device.

From the aforegoing it is apparent that the invention is not limited to vehicles with a box frame but can also be applied to vehicles with frames of other types.

## Claims

1. An elevator device (1) fitted to the rear of a transport vehicle provided with a safety bumper (27) in which:
- the vehicle has a load-bearing structure (14) of the type preferably formed from bent sheet metal elements joined together by spot welding and/or bolts;
- each of the lateral ends (26) of the safety bumper (27) lies inward of the corresponding point (28) of maximum lateral projection of the vehicle within the limits provided by law;
- the elevator device (1) is of the type comprising: a loading platform (2), a linkage (3) in the form of two articulated quadrilaterals, a hydraulic circuit and one or more elements (5) for supporting the vehicle load-bearing structure (14) on the ground and operated by the said hydraulic circuit (4), said articulated quadrilaterals (3) translationally moving the loading platform (2) vertically between the horizontal plane of the ground (24) on which the vehicle stands and the horizontal plane of the load floor (44) of said vehicle so that it remains parallel to said horizontal planes;
characterised in that:
- at least two of the arms (8, 9) of the two articulated quadrilaterals of the articulated quadrilateral linkage (3) operate between the lateral end (26) of the safety bumper (27) and the point (28) of maximum lateral projection of the vehicle;
- the total support elements (5) exert an upward force on the vehicle load-bearing structure (14) which is equal to or just greater than the maximum weight allowable on the loading platform (2).

2. A device as claimed in claim 1, characterised in that the hydraulic cylinders (17) acting within the articulated parallelogram and those acting within the support elements (5) are fed in parallel either simultaneously or with priority being given to those of the support elements (5), a maximum pressure valve (43) being provided in the circuit comprising the support elements (5) downstream of the non-return valve (41) and being set on the basis of the maximum lifting load scheduled for the device (1).

3. A device as claimed in claim 1, characterised in that the hydraulic cylinders (17, 30) acting within the articulated parallelogram and those acting within the support elements (5) are fed in parallel either simultaneously or starting with those acting within the support elements (5), so that because of the predominance of the thrust provided by these latter over the lifting thrust provided by (17) the support elements (5) are always lowered before the loading platform (2) rises, so automatically taking up the extent by which said support elements rise by the effect of the thrust of the vehicle suspensions each time a weight is unloaded from the vehicle, this being achieved automatically at the same moment in which the loading platform (2) rises to unload a new weight.

4. A device as claimed in claim 1, characterised in that the elevator device (1) is operated by a single hydraulic cylinder (17) positioned centrally to the device.

5. A device as claimed in claim 1, characterised in that at least part of the reaction arm (9) extends below the lifting arm (8).

6. A device as claimed in claims 4 and 5, characterised in that the hydraulic cylinder (17) acts on the lifting arm (8) and reaction arm (9) via a tubular element (11) of circular cross-section which is positioned axially inside a tubular element 10 of polygonal cross-section and is supported by self-lubricating supports.

7. A device as claimed in claim 6, characterised in that the tubular element 10 of polygonal cross-section is of scare cross-section and the supports are self-lubricating.

8. A device as claimed in claim 1, characterised in that the support element (5) comprises a leg (29) provided at one end with an idle wheel (32).

9. A device as claimed in claim 1, characterised in that the distance d between the lateral ends (26) of the safety bumper (27) and the points (28) of maximum lateral projection of the vehicle, between which distance said articulated quadrilateral linkages are contained, is indicatively of 100 mm.

10. A device as claimed in claim 1, characterised in that the lifting arm or the reaction arm or both are formed from a plurality of substantially parallel elements.

11. A device as claimed in claim 10, characterised in that the elements of said arms can be arranged in the same vertical plane.

12. A device as claimed in claim 10 or 11, characterised in that there are two said elements per side.

13. A device as claimed in claim 1, characterised in that the maximum pressure valve (43) of the circuit comprising the support elements (5) automatically maintains an upward force on the load-bearing structure (14) which is equal to or slightly greater than the maximum allowable loading of the loading platform (2) notwithstanding any increase in the load held on the load floor (44) or loading platform (2).

14. A device as claimed in claim 1, characterised in that the total thrust of the ground support system (5) is equal to or greater than the lifting thrust of the loading platform (2).
